# DEMANDE DE BREVET EUROPEEN

(11) **EP 1 132 231 A1**
(43) Date de publication de la demande: **12.09.2001**
(21) Numéro de dépôt: 01105282.6
(22) Date de dépôt: 05.03.2001
(51) Int. Cl.: B60H 1/34

(54) **Dispositif de chauffage, ventilation et/ou climatisation comportant au moins un élément de diffusion d'air dans l'habitacle d'un véhicule**

(30) Priorité: 06.03.2000 FR 0002833
(71) Demandeur: VALEO CLIMATISATION, 78321 La Verrière (FR)
(72) Inventeur: Petitjean, Pascale, 78640 Neauphle le Vieux (FR); Paumier, Carine, 78000 Versailles (FR); Loup, Didier, 78310 Maurepas (FR)
(74) Mandataire: Gérard, Michel

(57) **Abrégé**

L'invention concerne un dispositif de chauffage, ventilation et/ou de climatisation comportant au moins un canal de distribution d'air ayant une extrémité aval, et au moins un élément de diffusion d'air disposé à une dite extrémité aval. Il est caractérisé en ce que l'élément (1) de diffusion d'air comporte un support (11) pourvu d'ouvertures traversantes (17) et recouvert sur au moins une de ses faces d'un matériau (12, 16), ayant une résistance à l'air comprise entre 10 N.s.m⁻³ et 180 N.s.m⁻³.

## Description

La présente invention a pour objet un dispositif de chauffage, ventilation et/ou de climatisation comportant au moins un canal de distribution d'air ayant une extrémité aval, et au moins un élément de diffusion d'air disposé à une dite extrémité aval, pour diffuser de l'air dans l'habitacle d'un véhicule.

La diffusion d'air dans l'habitacle d'un véhicule se fait habituellement par l'intermédiaire d'une pluralité de buses. Ces installations présentent des inconvénients : elles provoquent des courants d'air et une mauvaise répartition de la température dans l'habitacle, ce qui altère le confort des passagers.

Pour remédier à ce problème, une solution connue consiste à diffuser l'air à travers une surface poreuse qui s'étend sur la planche de bord. Ces surfaces poreuses sont généralement obtenues en prévoyant un grand nombre de trous de petites dimensions transperçant une surface imperméable à l'air, comme mentionné dans la Demande de Brevet Français FR 2 074 471 et dans le Brevet Anglais GB 1 040 469.

Dans les dispositifs connus, les surfaces poreuses sont soit trop poreuses, auquel cas le débit d'air dans les buses de diffusion d'air associées à la diffusion est trop importante, soit insuffisamment poreuses, auquel cas la perte de charge est trop élevée et la dynamique de mise en température de l'habitacle est trop faible et son effet n'est pas ressenti de manière satisfaisante par les passagers.

La présente invention a pour objet un dispositif de chauffage, ventilation et/ou de climatisation qui permet de s'affranchir de ce problème et d'obtenir une diffusion d'air régulière qui assure une mise en température efficace de l'habitacle tout en évitant de provoquer les phénomènes de courants d'air précités.

Dans ce but, l'invention concerne un dispositif de chauffage, ventilation et/ou de climatisation comportant au moins un canal de distribution d'air ayant une extrémité aval, et au moins un élément de diffusion d'air disposé à une dite extrémité aval, caractérisé en ce qu'au moins un dit élément de diffusion d'air ayant par exemple une surface comprise entre 0,02 m² et 0,5 m² et de préférence 0,04 m² et 0,2 m², comporte un support pourvu d'ouvertures traversantes, et recouvert sur au moins une de ses faces d'un matériau ayant une résistance à l'air comprise entre 10 N.s.m⁻³ et 180 N.s.m⁻³.

Ladite résistance à l'air est avantageusement inférieure à 80 N.s.m⁻³.

Le matériau peut être un textile, notamment un textile multi-couches.

Le textile et le support peuvent être avantageusement solidarisés par thermoadhésion.

Il est avantageux que le support soit rigide ou semi-rigide.

Selon un mode de réalisation préféré, le support est thermoformé.

Le support peut être par exemple un nid d'abeilles.

L'invention concerne également un dispositif de chauffage, ventilation et/ou de climatisation comportant au moins un canal de distribution d'air ayant une extrémité aval, et au moins un élément de diffusion d'air disposé à une dite extrémité aval, caractérisé en ce qu'au moins un dit élément de diffusion d'air, ayant par exemple une surface comprise entre 0,02 m² et 0,5 m² et de préférence 0,04 m² et 0,2 m², présente une résistance à l'air comprise entre 10 N.s.m⁻³ et 180 N.s.m⁻³.

Ladite résistance à l'air est avantageusement inférieure à 80 N.s.m⁻³.

L'élément de diffusion d'air peut en particulier comporter une plaque perforée, un grillage, un plastique cellulaire à pores ouverts ou un matériau alvéolaire.

Il est avantageux que l'élément de diffusion d'air comporte au moins un textile.

L'élément de diffusion d'air peut comporter un support rigide ou semi-rigide dudit textile.

Le support peut être par exemple une plaque perforée.

Il est avantageux que le support présente une résistance à l'air au moins deux fois inférieure et de préférence au moins dix fois inférieure à celle dudit textile.

Selon un mode de réalisation préféré, le support présente des ouvertures traversantes.

Le textile peut être tissé ou bien non tissé, par exemple un velours.

Le textile peut être multicouches.

D'autres caractéristiques et avantages de l'invention apparaîtront mieux à la lecture de la description qui va suivre, donnée à titre d'exemple non limitatif, en liaison avec les dessins annexés, dans lesquels :
- la figure 1 représente une vue de la planche de bord d'un véhicule équipé d'un dispositif selon la présente invention ;
- la figure 2 représente une vue en coupe d'un exemple de réalisation d'un panneau composite selon l'invention ;
- la figure 3 représente une vue en coupe et en perspective d'un mode de réalisation d'un panneau composite selon l'invention ;
- les figures 4a à 4d représentent des modes de réalisation de supports à alvéoles traversantes selon des modes de réalisation de l'invention ;
- la figure 5 représente un graphique de perte de charge en fonction du débit d'un dispositif selon l'invention.

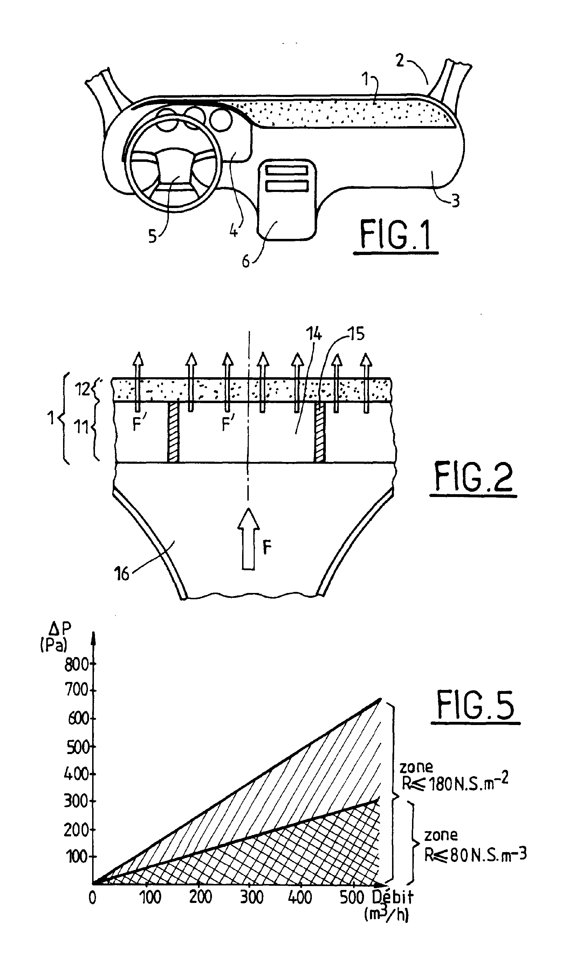

La planche de bord 3 représentée à la figure 1 comporte un tableau de bord 3, un panneau d'instruments 4, un volant 5, une console 6 et, à la partie supérieure de la planche de bord 3, et jouxtant le pare-brise 2, un élément surfacique de diffusion d'air 1 qui s'étend par exemple sur toute la largeur du véhicule, et qui permet de réaliser une diffusion d'air répartie, à faible débit surfacique, afin de réaliser une diffusion d'air sans courant d'air perceptible par les passagers et avec une répartition homogène de la température dans l'habitacle du véhicule.

La diffusion d'air est assurée par un matériau, notamment un textile, ayant une résistance à l'air comprise entre 10 N.s.m⁻³ et 180 N.s.m⁻³. En particulier, l'utilisation d'un textile tissé ou non tissé est particulièrement avantageuse en ce sens qu'elle permet une diffusion véritablement surfacique et homogène tout en permettant de réaliser un habillage de la planche de bord compatible avec les nécessités esthétiques des stylistes.

Pour les petits véhicules, dont l'habitacle est peu volumineux (par exemple, véhicules à deux places, véhicules citadins) une perte de charge plus élevée est admissible à la traversée du textile 12. Ce dernier peut avoir une résistance à l'air élevée, mais inférieure à 180 N.s.m⁻³, qui permet une dynamique de mise en température de l'habitacle satisfaisant le confort des passagers.

Pour des véhicules dont l'habitacle est plus volumineux, la dynamique de mise en température de l'habitacle doit permettre de mettre en température également le volume arrière du véhicule dans un délai satisfaisant. On choisira dans ce cas une résistance à l'air inférieure à 80 N.s.m⁻³.

Comme le montre la figure 2, l'élément de diffusion d'air 1 peut être un panneau composite associant au moins un dit matériau, notamment un textile 12 et un support 11, par exemple rigide ou semi-rigide 11. Le support 11 peut être un cadre sur lequel est fixée la couche perméable 12. Alternativement, le support présente des ouvertures traversantes 14 comportant des parois 15 qui assurent les propriétés mécaniques de l'ensemble. Ce support 11 sert à la rigidité et à la mise en forme du panneau ainsi constitué. Le support 11 peut être un grillage, une plaque perforée, ou un matériau alvéolaire, par exemple nid d'abeilles, présentant des alvéoles traversantes. De la sorte, l'élément de diffusion d'air 1 s'intègre à la planche de bord 3 aussi bien visuellement que mécaniquement. La section de l'extrémité du conduit 16 a une surface par exemple comprise entre 0,02 m² et 0,5 m² et de préférence 0,04 m² et 0,2 m².

Un flux d'air principal F est diffusé par une arrivée d'air divergente 16 et les alvéoles traversantes 14 réalisent une première subdivision de ce flux parallèlement à leur axe et ces flux subdivisés F' traversent ensuite le matériau 12, par exemple un textile pour réaliser la fonction recherchée.

La structure a alvéoles traversantes forme ainsi des petits canaux améliorant l'homogénéisation des flux, et la perte de charge est essentiellement due aux matériau 12 (et/ou 16).

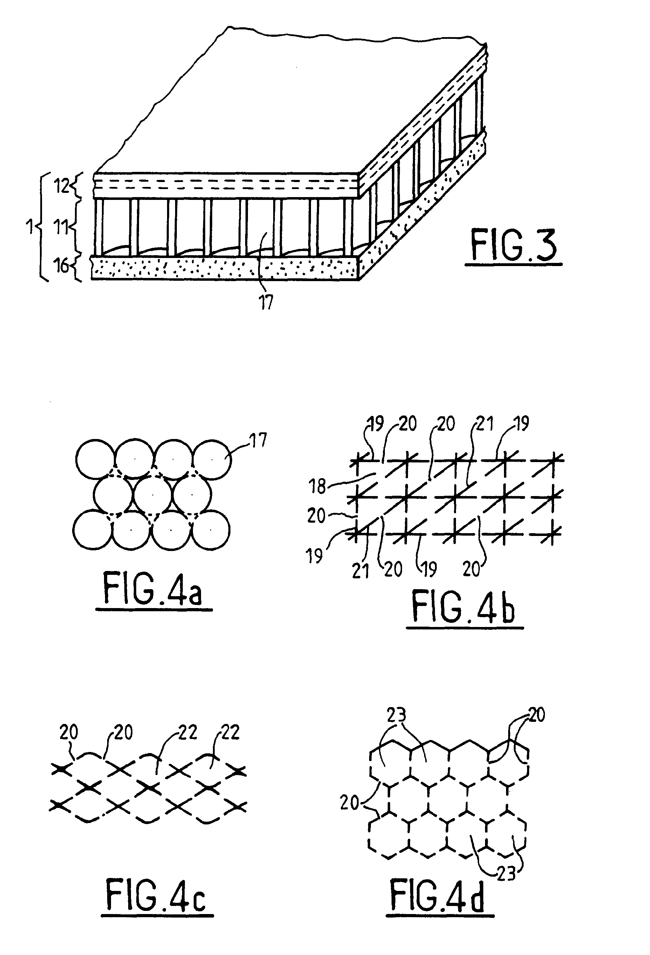

Comme le montre la figure 3, le panneau composite 1 peut comporter deux couches textiles 12 et 16 de part et d'autre de la structure alvéolaire traversante 11 qui présente des ouvertures ou alvéoles traversantes 17. La résistance à l'air cumulée à ces deux couches 12 et 16 est comprise entre 10 N.s.m⁻³ et 180 N.s.m⁻³, et plus particulièrement inférieure à 80 N.s.m⁻³. Cette structure est avantageuse, car elle permet une meilleure rigidification de l'ensemble en raison du fait que des films ou textiles 12 et 16 sont présents de part et d'autre de la structure 11. Ce composite présente également de bonnes caractéristiques d'absorption acoustique, ce qui fait que les passagers perçoivent moins le bruit du dispositif de chauffage, ventilation et/ou climatisation.

Les figures 4a à 4d montrent différents modes de réalisation des supports 11. A la figure 4a, les alvéoles sont circulaires. A la figure 4b, elles ont une forme de triangle rectangle dont les côtés 19 et d'hypoténuse 21 sont pourvus d'ouvertures 20, qui mettent en communication les alvéoles adjacentes 18. A la figure 4c, les alvéoles 22 sont en forme de losange et sont éventuellement pourvues d'ouvertures de communication 20 entre alvéoles adjacentes. A la figure 4d, on a représenté des alvéoles ou ouvertures traversantes 23 hexagonales, formées d'une structure en nid d'abeilles. Les parois des alvéoles 23 présentent éventuellement des ouvertures de communication 20.

Le panneau composite peut être fabriqué de manière simple, le collage étant réalisé par thermoadhésion et le formage du composite étant réalisé par thermoformage.

Un ou plusieurs panneaux composites peuvent être intégrés à la planche de bord et/ou au toit et/ou à la plage arrière d'un véhicule et/ou aux portières.

Enfin, la figure 5 représente, en fonction de la différence de pression ΔP exprimée en Pascal et du débit en m³/h, les zones de fonctionnement étant pour des valeurs de R, respectivement ≤ 180 N.s.m⁻³ et R < 80 N.s.m8⁻³.

## Revendications

1. Dispositif de chauffage, ventilation et/ou de climatisation comportant au moins un canal de distribution d'air ayant une extrémité aval, et au moins un élément de diffusion d'air disposé à une dite extrémité aval, **caractérisé en ce qu**'au moins un élément (1) de diffusion d'air présente une résistance à l'air comprise entre entre 10 N.s.m⁻³ et 180 N.s.m⁻³.

2. Dispositif selon la revendication 1, **caractérisé en ce que** ladite résistance à l'air est inférieure à 80 N.s.m⁻³.

3. Dispositif selon une des revendications 1 ou 2, **caractérisé en ce que** l'élément (1) de diffusion d'air comporte une plaque perforée, un grillage, un plastique cellulaire à pores ouverts ou un matériau alvéolaire.

4. Dispositif selon une des revendications précédentes, **caractérisé en ce que** ledit élément de diffusion d'air comporte au moins un textile.

5. Dispositif selon la revendication 4, **caractérisé en ce que** ledit élément de diffusion d'air comporte un support (11) rigide ou semi-rigide dudit textile.

6. Dispositif selon la revendication 5, **caractérisé en ce que** le support (11) présente une résistance à l'air au moins deux fois inférieure et de préférence au moins dix fois inférieure à celle dudit textile.

7. Dispositif selon une des revendications 4 à 6, **caractérisé en ce que** le textile (12, 16) est tissé.

8. Dispositif selon une des revendications 4 à 6, **caractérisé en ce que** le textile (12, 16) est non tissé.

9. Dispositif selon une des revendications 4 à 8, **caractérisé en ce que** le textile (12, 16) est multicouches.

10. Dispositif selon une des revendications précédentes, **caractérisé en ce qu**'au moins un dit élément de diffusion d'air a une surface comprise entre 0,02 m² et 0,5 m² et de préférence entre 0,04 m² et 0,2 m².
